# EUROPÄISCHE PATENTANMELDUNG

(11) **EP 0 932 316 A2**
(43) Veröffentlichungstag der Anmeldung: **28.07.1999**
(21) Anmeldenummer: 99100530.7
(22) Anmeldetag: 13.01.1999
(51) Int. Cl.: H04Q 7/32

(54) **Verfahren zum Betrieb eines Funktelefons, vorzugsweise eines Schurlostelefons, mit integriertem Funkrufempfänger, vorzugsweise einem Pagingempfänger**

(30) Priorität: 22.01.1998 DE 19802266
(71) Anmelder: ROBERT BOSCH GMBH, 70442 Stuttgart (DE)
(72) Erfinder: Treufels, Klaus, 38304 Wolfenbuettel (DE); Zwirner, Ulrich, 38300 Wolfenbuettel (DE)

(57) **Zusammenfassung**

Es wird ein Verfahren zum Betrieb eines Funktelefons (1), vorzugsweise eines Schnurlostelefons, mit integriertem Funkrufempfänger (20), vorzugsweise einem Paging-Empfänger vorgeschlagen, das eine verbesserte Erreichbarkeit des Funktelefons (1) ermöglicht. Das Funktelefon (1) wird in einem Funkrufmodus zum Empfang von Funkrufsignalen betrieben, wenn keine Telefonverbindung über eine Basisstation (5) zum Funktelefon (1) aufbaubar ist. Das Funktelefon (1) wird in einem Telefonmodus zum Empfang und Aussenden von Telefonsignalen betrieben, wenn eine Telefonverbindung über eine Basisstation (5) zum Funktelefon (1) aufbaubar ist. Das Funktelefon (1) wird vom Telefonmodus in den Funkrufmodus umgeschaltet, sobald festgestellt wird, daß eine Telefonverbindung über die Basisstation (5) nicht mehr aufbaubar ist. Das Funktelefon (1) wird vom Funkrufmodus in den Telefonmodus umgeschaltet, sobald festgestellt wird, daß eine Telefonverbindung über die Basisstation aufbaubar ist.

## Beschreibung

### Stand der Technik

Die Erfindung geht von einem Verfahren zum Betrieb eines Funktelefons mit integriertem Funkrufempfänger nach der Gattung des Hauptanspruchs aus.

Aus der Veröffentlichung 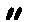 The Industry Event, DECT '97, Towards Full Commercialisation" ist aus einem Beitrag von Steffan Ring ein als 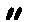 DECT-Pager" bezeichnetes Schnurlostelefon mit integriertem Funkrufempfänger bekannt.

### Vorteile der Erfindung

Das erfindungsgemäße Verfahren mit den Merkmalen des Hauptanspruchs hat demgegenüber den Vorteil, daß das Funktelefon in einem Funkrufmodus zum Empfang von Funkrufsignalen betrieben wird, wenn keine Telefonverbindung über eine Basisstation zum Funktelefon aufbaubar ist, daß das Funktelefon in einem Telefonmodus zum Empfang und Aussenden von Telefonsignalen betrieben wird, wenn eine Telefonverbindung über eine Basisstation zum Funktelefon aufbaubar ist, daß das Funktelefon vom Telefonmodus in den Funkrufmodus umgeschaltet wird, sobald festgestellt wird, daß eine Telefonverbindung über die Basisstation nicht mehr aufbaubar ist, und daß das Funktelefon vom Funkrufmodus in den Telefonmodus umgeschaltet wird, sobald festgestellt wird, daß eine Telefonverbindung über die Basisstation aufbaubar ist. Auf diese Weise wird abhängig von der Erreichbarkeit des Funktelefons über eine Telefonverbindung das Funktelefon automatisch in einem Betriebsmodus betrieben, der bestmögliche Kommunikationsbedingungen zur Verfügung stellt. Wenn eine Telefonverbindung über die Basisstation zum Funktelefon aufbaubar ist, ist dies der Telefonmodus mit bidirektionaler Kommunikationsmöglichkeit. Wenn keine Telefonverbindung über die Basisstation zum Funktelefon aufbaubar ist, ist dies der Funkrufmodus, der wenigstens noch den Empfang von Funkrufsignalen ermöglicht. Das Funktelefon wird somit immer in einem definierten und eindeutigen Betriebsmodus betrieben, der automatisch in Abhängigkeit der Empfangsbedingungen in der bestmöglichen Kommunikationsart betrieben wird. Dies erhöht den Bedienkomfort für den Benutzer erheblich, da er nicht selbst zwischen verschiedenen Betriebsmodi umschalten muß und ihm dennoch gewährleistet wird, daß sein Funktelefon in der gerade bestmöglichen Betriebsart betrieben wird.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß ein Funkrufsender von der Basisstation zur Abstrahlung von Funkrufsignalen an das Funktelefon veranlaßt wird, wenn keine Telefonverbindung über die Basisstation zum Funktelefon aufbaubar ist. Auf diese Weise können dem Funktelefon Nachrichten über die Basisstation auch dann übermittelt werden, wenn über die Basisstation keine Telefonverbindung zum Funktelefon aufbaubar ist. Die Funktionalität der Basisstation wird dadurch erhöht und die Erreichbarkeit des Funktelefons über die Basisstation wird erheblich verbessert. Das Funktelefon ist somit über die Basisstation beispielsweise auch dann erreichbar, wenn es sich gar nicht in der von der Basisstation aufgespannten Funkzelle befindet oder ein über das Telefonnetz für das Funktelefon eingehender Ruf nicht angenommen wird oder das Funktelefon nicht zum Empfang von Telefonsignalen eingeschaltet ist.

Ein weiterer Vorteil besteht darin, daß vom Funktelefon zu vorgegebenen Zeiten eine Verbindungsprüfung durchgeführt wird, bei der empfangene Signale nach Synchronisationsdaten der Basisstation abgetastet werden, daß das Funktelefon im Funkrufmodus betrieben wird, wenn aufgrund der empfangenen Daten festgestellt wird, daß keine Synchronisation mit der Basisstation möglich ist, und daß das Funktelefon im Telefonmodus betrieben wird, wenn aufgrund der empfangenen Daten festgestellt wird, daß eine Synchronisation mit der Basisstation möglich ist. Auf diese Weise kann das Funktelefon überprüfen, ob es sich in der von der Basisstation aufgespannten Funkzelle befindet und in Abhängigkeit davon den Betriebsmodus für die bestmögliche Kommunikationsart automatisch einstellen. So wird innerhalb der Funkzelle möglichst der die bidirektionale Kommunikation ermöglichende Telefonmodus eingestellt und außerhalb der Funkzelle können in dem Funkrufmodus immer noch Nachrichten vom Funktelefon empfangen werden.

Ein weiterer Vorteil besteht darin, daß im Funkrufmodus Stromsparzeiten vorgesehen sind, in denen die Verbindungsprüfung durchgeführt wird. Auf diese Weise wird verhindert, daß eine Umschaltung des Funktelefons vom Funkrufmodus in den Telefonmodus zu einem Zeitpunkt erfolgt, in dem Funkrufsignale im Funkrufmodus vom Funktelefon empfangen werden können, so daß der Empfang solcher Signale nicht gestört wird. In den Stromsparzeiten des Funkrufmodus hingegen ist ein Empfang von Funkrufsignalen nicht vorgesehen, so daß dort die Verbindungsprüfung und damit gegebenenfalls die Umschaltung in den Telefonmodus störungsfrei durchgeführt werden kann.

Ein weiterer Vorteil besteht darin, daß bei Nichtannahme eines über ein Telekommunikationsnetz eingehenden Rufes ein im Telefonmodus befindliches Funktelefon in den Funkrufmodus umgeschaltet wird. Auf diese Weise können vom Funktelefon bei Nichtannahme eines über das Telekommunikationsnetz eingehenden Rufes, beispielsweise aufgrund der Abwesenheit des Benutzers, zumindest Nachrichten vom Funktelefon im Funkrufmodus empfangen und gegebenenfalls gespeichert und/oder an einer Anzeige des Funktelefons für eine spätere Information des Benutzers dargestellt werden.

Ein weiterer Vorteil besteht darin, daß durch das Funktelefon im Telefonmodus keine Funkrufsignale empfangen und/oder im Funkrufmodus keine Telefonsignale gesendet oder empfangen werden. Auf diese Weise sind die beiden Betriebsmodi eindeutig voneinander getrennt, wodurch eine hierarchische Abstufung vom Telefonmodus mit bidirektionaler Kommunikation zum Funkrufmodus mit Empfangsmöglichkeit für Funkrufsignale bei Nichterreichbarkeit des Funktelefons über das Telekommunikationsnetz und eine größere Übersichtlichkeit für den Benutzer erreicht wird.

Ein weiterer Vorteil besteht darin, daß am Funktelefon vorzugsweise mittels eines Schalters zwischen dem Funkrufmodus und dem Telefonmodus umgeschaltet wird. Auf diese Weise kann das Funktelefon beispielsweise in einen energiesparenden, sogenannten Schlafmodus geschaltet werden, in dem eine Kommunikation über das Kommunikationsnetz nicht möglich ist. Der Schlafmodus entspricht dabei in diesem Fall dem Funkrufmodus, so daß zumindest Funkrufsignale in diesem Betriebsmodus vom Funktelefon empfangbar sind.

### Zeichnung

Ein Ausführungsbeispiel der Erfindung ist in der Zeichnung dargestellt und in der nachfolgenden Beschreibung näher erläutert. Es zeigen Figur 1 eine räumliche Anordnung einer Basisstation, eines Funktelefones und eines Funkrufsenders, Figur 2 ein Blockschaltbild eines Funktelefons, Figur 3 ein Blockschaltbild einer Basisstation, Figur 4 einen Ablaufplan für eine Steuerung des Funktelefons, Figur 5 einen Ablaufplan für eine Steuerung der Basisstation und Figur 6 eine alternative Ausführungsform des Funktelefons in einem Blockschaltbild.

### Beschreibung des Ausführungsbeispiels

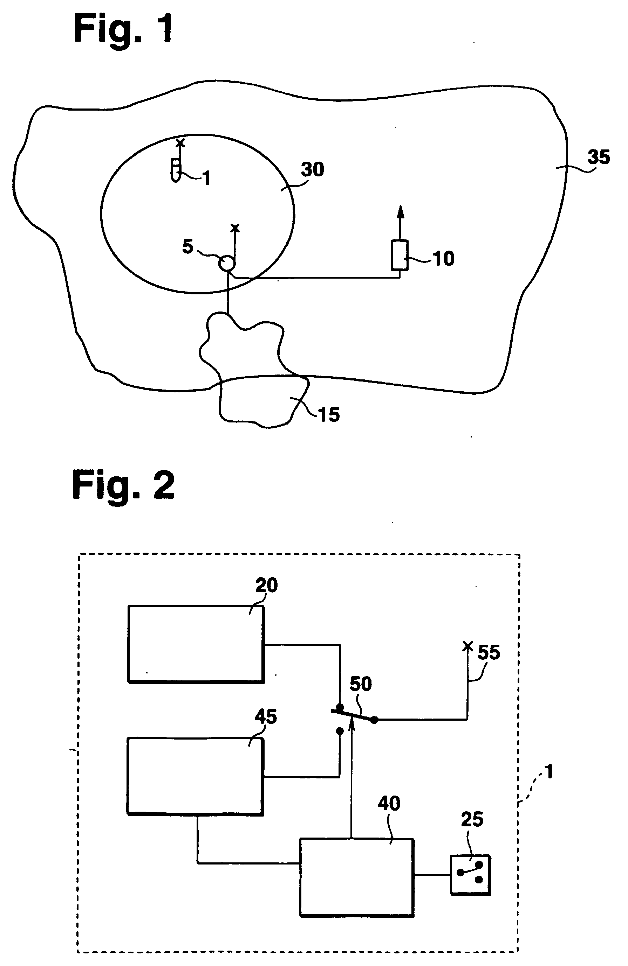

In Figur 1 kennzeichnet 1 ein Funktelefon, das räumlich in einer von einer Basisstation 5 aufgespannten Funkzelle 30 angeordnet ist. Die Funkzelle 30 wiederum ist räumlich in einer Funkruf-Zone 35 angeordnet. Die Funkruf-Zone 35 wird von einem Funkrufsender 10 mit Funkrufsignalen versorgt. Die Basisstation 5 ist sowohl mit dem Funkrufsender 10 als auch mit einem Telekommunikationsnetz 15 verbunden.

In Figur 2 ist ein Blockschaltbild des Funktelefons 1 dargestellt. Das Funktelefon 1 kann dabei beispielsweise als Mobiltelefon oder als Schnurlostelefon ausgebildet sein. Bei Ausbildung als Mobiltelefon kann das Funktelefon 1 beispielsweise gemäß dem GSM-Standard (Global System for Mobile Communications) betrieben werden. Bei Ausbildung als Schnurlostelefon kann das Funkgerät 1 beispielsweise gemäß dem DECT-Standard (Digital Enhanced Cordless Telecommunications) betrieben werden. Das Funktelefon 1 umfaßt eine erste Steuerung 40, an die ein Schalter 25 und eine erste Sende-/Empfangseinheit 45 für Telefonsignale angeschlossen ist. Die erste Steuerung 40 steuert außerdem einen ersten Umschalter 50 an, der eine erste Sende-/Empfangsantenne 55 wahlweise mit der ersten Sende-/Empfangseinheit 45 oder einem Funkrufempfänger 20 verbindet. Der Funkrufempfänger 20 kann dabei beispielsweise als Paging-Empfänger ausgebildet sein. Der Funkrufempfänger 20 und die erste Sende-/Empfangseinheit 45 für Telefonsignale sind also in das Funktelefon 1 integriert.

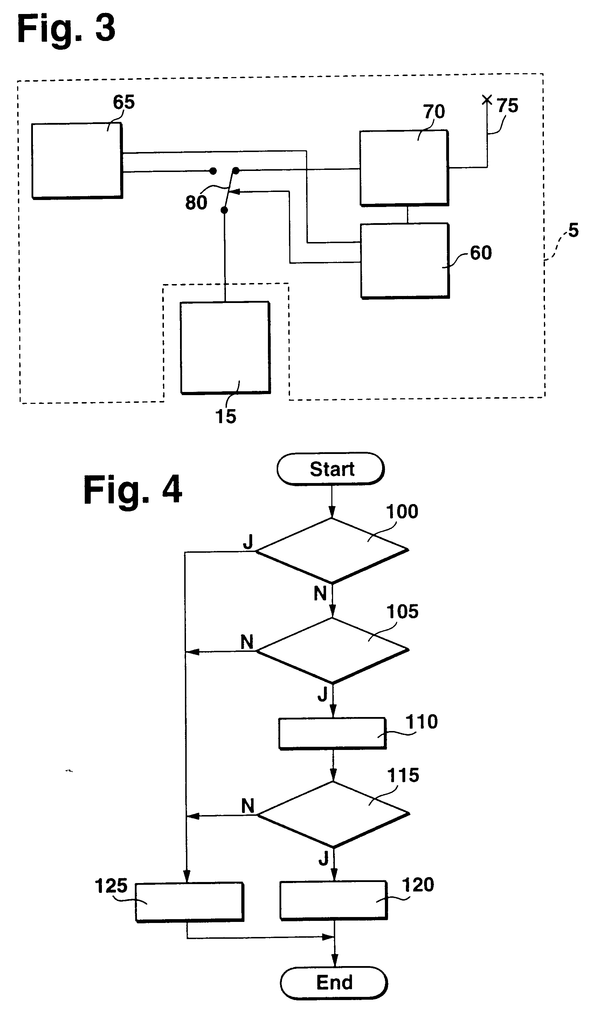

In Figur 3 ist ein Blockschaltbild für die Basisstation 5 dargestellt. Die Basisstation 5 umfaßt eine zweite Steuerung 60, an die eine zweite Sende-/Empfangseinheit 70 angeschlossen ist. Die zweite Steuerung 60 steuert außerdem einen zweiten Umschalter 80 an, über den das Telekommunikationsnetz 15 wahlweise an die zweite Sende-/Empfangseinheit 70 oder an eine Schnittstelle 65 zum Anschluß des Funkrufsenders 10 an die Basisstation 5 angeschlossen werden kann. Die zweite Sende-/Empfangseinheit 70 ist außerdem mit einer zweiten Sende-/Empfangsantenne 75 verbunden.

Ein lokales Funknetz stellt eine bidirektionale Sprachverbindung zwischen dem Funktelefon 1 und der Basisstation 5 mit einer auf die Funkzelle 30 eingeschränkten Reichweite zur Verfügung. Über das lokale Funknetz können zwischen dem Funktelefon 1 und der Basisstation 5 zwischen der ersten Sende-/Empfangseinheit 45 und der zweiten Sende-/Empfangseinheit 70 Telefonsignale ausgetauscht und somit eine Telekommunikationsverbindung zwischen dem Funktelefon 1 und einem beliebigen an das Telekommunikationsnetz 15 angeschlossenen Teilnehmer betrieben werden. Dazu besitzt die Basisstation 5 eine weitere Schnittstelle zum Telekommunikationsnetz 15, die in Figur 3 nicht dargestellt ist, jedoch funktional der zweiten Sende-/Empfangseinheit 70 zugeordnet ist. Für den beschriebenen Fall befindet sich das Funktelefon 1 in einem Telefonmodus, wobei die erste Sende-/Empfangseinheit 45 über den ersten Umschalter 50 mit der ersten Sende-/Empfangsantenne 55 verbunden ist. Zum Austausch von Telefonsignalen mit einem Teilnehmer des Telekommunikationsnetzes 15 muß dann in der Basisstation 5 die zweite Sende-/Empfangseinheit 70 über den Zweiten Umschalter 80 mit dem Telekommunikationsnetz 15 verbunden sein. Befindet sich das Funktelefon 1 im Telefonmodus, so können vom Funktelefon 1 keine Funkrufsignale empfangen werden.

In einem Funkrufmodus ist der Funkrufempfänger 20 des Funktelefons 1 über den ersten Umschalter 50 mit der ersten Sende-/Empfangsantenne 55 verbunden. In diesem Betriebsmodus des Funktelefons 1 können nur Funkrufsignale vom Funktelefon 1 empfangen werden, es können jedoch keine Telefonsignale von der ersten Sende-/Empfangseinheit 45 gesendet oder empfangen werden. In einem Funkrufsystem werden Funkrufsignale vom Funkrufsender 10 innerhalb der Funkruf-Zone 35 übertragen und von entsprechend adressierten Funkrufempfängern innerhalb dieser Funkruf-Zone 35 empfangen. Dabei läßt sich durch die Funkruf-Zone 35 ein im Vergleich zur Funkzelle 30 großflächiger Bereich abdecken. Der Funkrufsender 10 kann beispielsweise einer bestehenden Funkruf-Infrastruktur, beispielsweise dem City-Ruf-System, zugeordnet sein und einem Funkrufsystem mit mehreren, Funkruf-Zonen aufspannenden Funkrufsendern angehören. Der Funkrufsender 10 kann jedoch auch unabhängig von bestehender Funkruf-Infrastruktur rein lokal betrieben werden. Vom Funkrufempfänger 20 empfangene Funkrufsignale können in einem in Figur 2 nicht dargestellten Speicher gespeichert und gegebenenfalls an einer in Figur 2 ebenfalls nicht dargestellten Anzeigevorrichtung zur Darstellung gebracht werden. Auch eine akustische Wiedergabe empfangener Funkrufsignale am Funktelefon 1 ist möglich.

Über die Schnittstelle 65 der Basisstation 5 zum Anschluß des Funkrufsenders 10 können Daten aus dem Telekommunikationsnetz 15 an den Funkrufsender 10 weitergeleitet, vom Funkrufsender 10 abgestrahlt und vom Funktelefon 1 empfangen werden, sofern es sich im Funkrufmodus befindet. Dabei ist dann die Schnittstelle 65 zum Anschluß des Funkrufsenders 10 über den zweiten Umschalter 80 mit dem Telekommunikationsnetz 15 zu verbinden.

Bei dem erfindungsgemäßen Verfahren wird das Funktelefon 1 mit dem integrierten Funkrufempfänger 20 im Funkrufmodus zum Empfang von Funkrufsignalen betrieben, wenn keine Telefonverbindung über die Basisstation 5 zum Funktelefon 1 aufbaubar ist. Das Funktelefon 1 wird im Telefonmodus zum Empfang und Aussenden von Telefonsignalen betrieben, wenn eine Telefonverbindung über die Basisstation 5 zum Funktelefon 1 aufbaubar ist. Das Funktelefon 1 wird vom Telefonmodus in den Funkrufmodus umgeschaltet, sobald festgestellt wird, daß eine Telefonverbindung über die Basisstation 5 nicht mehr aufbaubar ist. Das Funktelefon 1 wird vom Funkrufmodus in den Telefonmodus umgeschaltet, sobald festgestellt wird, daß eine Telefonverbindung über die Basisstation aufbaubar ist.

Das Umschalten zwischen dem Telefonmodus und dem Funkrufmodus erfolgt dabei im Funkgerät 1 über den ersten Umschalter 50, der von der ersten Steuerung 40 dazu entsprechend angesteuert wird. Durch das erfindungsgemäße Verfahren wird also das Funktelefon 1 von der ersten Steuerung 40 zur Umschaltung vom Telefonmodus in den Funkrufmodus veranlaßt, sobald eine Telefonverbindung zwischen der Basisstation 5 und dem Funktelefon 1 nicht mehr aufgebaut werden kann. Dafür können beispielsweise die folgenden drei Fälle unterschieden werden:

In einem ersten Fall verläßt das Funktelefon 1 die Funkzelle 30 der Basisstation 5. Vom Funktelefon 1 wird zu vorgegebenen Zeiten eine Verbindungsprüfung durchgeführt, bei der empfangene Signale nach Synchronisationsdaten der Basisstation 5 abgetastet werden. Dazu wertet die erste Steuerung 40 von der ersten Sende-/Empfangseinheit 45 empfangene Daten aus. Zu den vorgegebenen Zeiten muß daher die erste Steuerung 40 den ersten Umschalter 50 zur Verbindung der ersten Sende-/Empfangsantenne 55 mit der ersten Sende-/Empfangseinheit 45 veranlassen, sofern das Funktelefon 1 sich im Funkrufmodus befindet. Andernfalls, d. h. im Telefonmodus ist die erste Sende-/Empfangsantenne 55 über den ersten Umschalter 50 sowieso mit der ersten Sende-/Empfangseinheit 45 verbunden. Befindet sich das Funktelefon 1 in der Funkzelle 30 der Basisstation 5, so werden zu den vorgegebenen Zeiten von der ersten Sende-/Empfangseinheit 45 Synchronisationsdaten der Basisstation 5 empfangen. Mittels der empfangenen Synchronisationsdaten kann das Funktelefon 1 auf die Basisstation 5 aufsynchronisiert werden. Eine Telefonverbindung kann somit über die Basisstation 5 zum Funktelefon 1 aufgebaut werden, so daß das Funktelefon 1 im Telefonmodus betrieben wird und die erste Sende-/Empfangsantenne 55 über den entsprechend von der ersten Steuerung 40 angesteuerten ersten Umschalter 50 mit der ersten Sende-/Empfangseinheit 45 verbunden ist. Verläßt das Funktelefon 1 die Funkzelle 30 der Basisstation 5, so werden in der ersten Sende-/Empfangseinheit 45 keine Synchronisationsdaten der Basisstation 5 mehr empfangen, mittels denen das Funktelefon 1 sich auf die Basisstation 5 aufsynchronisieren kann. Eine Telefonverbindung über die Basisstation 5 zum Funktelefon 1 ist somit nicht mehr aufbaubar. Empfängt das Funktelefon 1 auch von keiner anderen, in Figur 1 nicht dargestellten Basisstation Synchronisationsdaten, mittels denen sie sich zumindest auf eine der Basisstationen aufsynchronisieren könnte, so läßt sich auch über die anderen Basisstationen keine Telefonverbindung zum Funktelefon 1 aufbauen. Die erste Steuerung 40 varanlaßt daraufhin eine Umschaltung des ersten Umschalters 50 zur Verbindung des Funkrufempfängers 20 mit der ersten Sende-/Empfangsantenne 55 und damit zum Betrieb des Funktelefons 1 im Funkrufmodus. Im Funkrufmodus sind gemäß der verwendeten Übertragungsprotokolle, beispielsweise dem POCSAG-Protokoll (Post Office Code Standardisation Advisory Group) Stromsparzeiten vorgesehen, in denen von der ersten Steuerung 40 eine Verbindungsprüfung durchgeführt werden kann. Dabei wird in den Stromsparzeiten der erste Umschalter 50 zur Verbindung der ersten Sende-/Empfangsantenne 55 mit der ersten Sende-/Empfangseinheit 45 veranlaßt und geprüft, ob Synchronisationsdaten von einer Basisstation empfangen werden, auf die sich das Funktelefon 1 aufsynchronisieren kann. Dies ist dann der Fall, wenn das Funktelefon 1 beispielsweise wieder in die Funkzone 30 der Basisstation 5 eintritt. Eine Telefonverbindung ist dann über die Basisstation 5 wieder zum Funktelefon 1 aufbaubar und die erste Steuerung 40 veranlaßt dann den ersten Umschalter 50, die Verbindung zwischen der ersten Sende-/Empfangsantenne 55 und der ersten Sende-/Empfangseinheit 45 aufrechtzuerhalten, so daß eine Umschaltung des Funktelefons 1 in den Telefonmodus erfolgt. Wird die Verbindungsprüfung in den Stromsparzeiten des Funkrufmodus durchgeführt, so wird verhindert, daß Funkrufsignale vom Funkrufempfänger 20 aufgrund der Verbindungsprüfung nicht empfangen werden können.

In einem zweiten Fall befindet sich das Funktelefon 1 in der Funkzelle 30 der Basisstation 5 und wird im Telefonmodus betrieben. Bei Nichtannahme eines über das Telekommunikationsnetz 15 eingehenden Rufes des im Telefonmodus befindlichen Funktelefons 1 veranlaßt die erste Steuerung 40 die Umschaltung des ersten Umschalters 50 zur Verbindung der ersten Sende-/Empfangsantenne 55 mit dem Funkrufempfänger 20 und somit die Umschaltung des Funktelefons 1 in den Funkrufmodus. Diese Umschaltung erfolgt nach Ablauf einer Signalisierungsphase im Funktelefon 1, der eine Folge von Rufsignalen bei der Basisstation 5 entspricht. Wurde der Ruf nach Ablauf der Signalisierungsphase nicht angenommen, so wird das Funktelefon 1 in den Funkrufmodus umgeschaltet.

In einem dritten Fall kann das Funktelefon 1 mittels des Schalters 25 oder einer anderen Umschalteinrichtung manuell vom Benutzer zwischen dem Funkrufmodus und dem Telefonmodus umgeschaltet werden. Dabei kann beispielsweise ein Schlafmodus eingestellt werden, bei dem keine Telefonsignale von der ersten Sende-/Empfangseinheit 45 gesendet oder empfangen werden können. Der Schlafmodus dient dabei der Energieeinsparung, da die erste Sende-/Empfangseinheit 45 in diesem Betriebsmodus ausgeschaltet ist. In diesem Schlafmodus veranlaßt die erste Steuerung 40 den ersten Umschalter 50 zur Verbindung der ersten Sende-/Empfangsantenne 55 mit dem Funkrufempfänger 20, so daß das Funktelefon 1 im Funkrufmodus betrieben wird. Während die erste Sende-/Empfangseinheit 45 ausgeschaltet ist, können somit dennoch Funkrufsignale vom Funktelefon 1 empfangen werden. Durch entsprechende Betätigung des Schalters 25 kann jedoch vom Funkrufmodus wieder in den Telefonmodus umgeschaltet werden, so daß die erste Sende-/Empfangsantenne 55 über den entsprechend von der ersten Steuerung 40 angesteuerten ersten Umschalter 50 mit der ersten Sende-/Empfangseinheit 45 verbunden wird. Für den Fall, daß die Umschaltung zwischen dem Funkrufmodus und dem Telefonmodus gemäß dem Schalter 25 mit dem Schlafmodus gekoppelt ist, wird eine ausgeschaltete erste Sende-/Empfangseinheit 45 wieder eingeschaltet, wenn mittels des Schalters 25 vom Funkrufmodus in den Telefonmodus umgeschaltet wird.

Die genannten Fälle, in denen eine Telefonverbindung zwischen der Basisstation 5 und dem Funktelefon 1 nicht zustande kommt, können von der Basisstation 5 nicht unterschieden werden. Die zweite Steuerung 60 der Basisstation 5 kann nur aufgrund von in der zweiten Sende-/Empfangseinheit 70 empfangenen Telefonsignalen der ersten Sende-/Empfangseinheit 45 erkennen, daß eine Telefonverbindung zwischen der Basisstation 5 und dem Funktelefon 1 besteht. Werden trotz einem vorliegenden Verbindungswunsch aus dem Telekommunikationsnetz 15 auch nach Aufforderung durch entsprechende, an das Funktelefon 1 gesendete Aufforderungssignale keine Telefonsignale vom Funktelefon 1 in der Basisstation 5 empfangen, so stellt die zweite Steuerung 60 der Basisstation 5 fest, daß eine Telefonverbindung über die Basisstation 5 zum Funktelefon 1 nicht aufbaubar ist. Dabei ist in einem Grundzustand oder im Telefonbetrieb der Basisstation 5 das Telekommunikationsnetz 15 über den entsprechend von der zweiten Steuerung 60 angesteuerten Zweiten Umschalter 80 mit der zweiten Sende-/Empfangseinheit 70 verbunden. Ein Verbindungswunsch aus dem Telekommunikationsnetz 15 wird auf diese Weise von der zweiten Sende-/Empfangseinheit 70 erkannt, die daraufhin ein entsprechendes Aufforderungssignal über die zweite Sende-/Empfangsantenne 75 an das Funktelefon 1 absendet. Werden nach einer vorgegebenen Zeit nach Aussenden des Aufforderungssignals von der zweiten Sende-/Empfangseinheit 70 keine Telefonsignale von dem Funktelefon 1 empfangen, so veranlaßt die zweite Steuerung 60 den zweiten Umschalter 80 zur Verbindung der Schnittstelle 65 zum Anschluß des Funkrufsenders 10 mit dem Telekommunikationsnetz 15. Auf diese Weise können numerische und/oder alphanumerische Nachrichten aus dem Telekommunikationsnetz 15 über die Schnittstelle 65 zum Anschluß des Funkrufsenders 10 an den Funkrufsender 10 weitergeleitet und von dort zum Funkrufempfänger 20 des Funktelefons 1 übertragen werden. Der Informationsgehalt für die Übertragung der Funkrufsignale kann in Abhängigkeit des verwendeten Funkrufsystems unterschiedliche Formen annehmen.

Die Schnittstelle 65 zum Anschluß des Funkrufsenders 10 an die Basisstation 5 kann über einen externen Anschluß, beispielsweise einen Telefonanschluß oder einen internen Anschluß erfolgen.

Wird also ein Teilnehmer über das Telekommunikationsnetz 15 angerufen und ist nicht erreichbar, so daß zu seinem Funktelefon 1 über die Basisstation 5 keine Telefonverbindung aufgebaut werden kann, so können Informationen an das Funktelefon 1 vom Telekommunikationsnetz 15 dennoch über das Funkrufsystem übertragen werden. Über die Schnittstelle 65 zum Anschluß des Funkrufsenders 10 kann die zweite Steuerung 60 der Basisstation 5 den Funkrufsender 10 zur Abstrahlung der entsprechenden Funkrufsignale an das Funktelefon 1 veranlassen, wozu die zweite Steuerung 60 zusätzlich mit der Schnittstelle 65 zum Anschluß des Funkrufsenders 10 verbunden ist.

In Figur 4 ist ein Ablaufplan für die Funktionsweise der ersten Steuerung 40 dargestellt. Bei einem Programmpunkt 100 wird geprüft, ob aufgrund einer Schalterbetätigung des Schalters 25 der Funkrufmodus bzw. der Schlafmodus am Funktelefon 1 eingestellt werden soll. Ist dies der Fall, so wird zu Programmpunkt 125 verzweigt, andernfalls wird zu Programmpunkt 105 verzweigt. Bei Programmpunkt 125 veranlaßt die erste Steuerung 40 den ersten Umschalter 50 zur Verbindung des Funkrufempfängers 20 mit der ersten Sende-/Empfangsantenne 55, sofern diese Verbindung nicht bereits besteht. Das Funktelefon 1 befindet sich dann in dem Funkrufmodus und kann Funkrufsignale im Funkrufempfänger 20 über die erste Sende-/Empfangsantenne 55 empfangen. Bei Programmpunkt 105 wird geprüft, ob sich das Funktelefon 1 in der Funkzelle 30 befindet, bzw. ob eine Telefonverbindung über eine Basisstation möglich ist. Ist dies der Fall, so wird zu Programmpunkt 110 verzweigt, andernfalls wird zu Programmpunkt 125 verzweigt. Bei Programmpunkt 110 wird der Telefonmodus am Funktelefon 1 eingestellt, wenn er nicht schon eingestellt war, so daß von der ersten Sende-/Empfangseinheit 45 Telefonsignale mittels der ersten Sende-/Empfangsantenne 55 gesendet und empfangen werden können. Anschließend wird zu einem Programmpunkt 115 verzweigt. Bei Programmpunkt 115 wird geprüft, ob ein über das Telekommunikationsnetz 15 eingehender Ruf angenommen wird. Ist dies der Fall, so wird zu Programmpunkt 120 verzweigt, andernfalls wird zu Programmpunkt 125 verzweigt. Bei Programmpunkt 120 wird eine bidirektionale Sprach- bzw. Telekommunikationsverbindung zwischen dem Funktelefon 1 und der Basisstation 5 eingerichtet. Nach Programmpunkt 120 wird der Programmteil ebenso verlassen wie nach Programmpunkt 125.

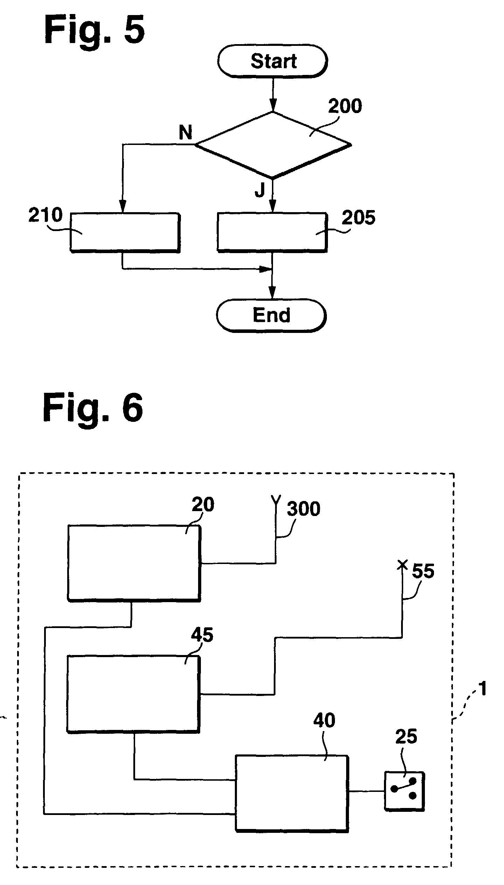

Figur 5 stellt einen Ablaufplan für die Funktionsweise der zweiten Steuerung 60 dar. Bei einem Programmpunkt 200 wird geprüft, ob zwischen der Basisstation 5 und dem Funktelefon 1 eine Telefonverbindung eingerichtet werden kann. Ist dies der Fall, so wird zu Programmpunkt 205 verzweigt, andernfalls wird zu Programmpunkt 210 verzweigt. Bei Programmpunkt 205 wird die Telefonverbindung zwischen der Basisstation 5 und dem Funktelefon 1 eingerichtet, wobei das Telekommunikationsnetz 15 über den entsprechend von der zweiten Steuerung 60 angesteuerten zweiten Umschalter 80 mit der zweiten Sende-/Empfangseinheit 70 verbunden wird, wenn diese Verbindung nicht bereits besteht. Bei Programmpunkt 210 veranlaßt die zweite Steuerung 60 eine Verbindung des Telekommunikationsnetzes 15 über den entsprechend angesteuerten zweiten Umschalter 80 mit der Schnittstelle 65 zum Anschluß des Funkrufsenders 10, wenn eine solche Verbindung nicht bereits besteht, und aktiviert über die Schnittstelle 65 zum Anschluß des Funkrufsenders 10 den Funkrufsender 10 zur Abstrahlung von Informationen aus dem Telekommunikationsnetz 15 an das Funktelefon 1 in dem Funkrufsystem. Nach Programmpunkt 205 wird der Programmteil ebenso verlassen wie nach Programmpunkt 210.

Nach Beendigung der Übertragung der Funkrufsignale vom Funkrufsender 10 an das Funktelefon 1 teilt die Schnittstelle 65 zum Anschluß des Funkrufsenders 10 der zweiten Steuerung 60 das Ende dieser Übertragung mit, woraufhin die zweite Steuerung 60 den zweiten Umschalter 80 veranlaßt, das Telekommunikationsnetz 15 wieder mit der zweiten Sende-/Empfangseinheit 70 zu verbinden. Bei einem erneuten Verbindungswunsch vom Telekommunikationsnetz 15 kann somit die zweite Steuerung 60 erneut überprüfen, ob eine Telefonverbindung zwischen der Basisstation 5 und dem Funktelefon 1 inzwischen wieder möglich ist.

Durch das erfindungsgemäße Verfahren kann außerhalb der Funkzelle 30 automatisch das Funktelefon 1 auf Empfang von Signalen in dem Funkrufsystem umgestellt werden. Die Umschaltung erfolgt in einfachster Weise durch die erste Steuerung 40, wenn keine Telefonverbindung zwischen der Basisstation 5 und dem Funktelefon 1 aufgebaut werden kann. Dabei wird der Funksender 10 zur Abstrahlung von Funkrufsignalen durch die zweite Steuerung 60 der Basisstation 5 veranlaßt. Auf Wunsch kann ein Benutzer das Funkrufsystem durch manuelles Umschalten des Funktelefons 1 mittels des Schalters 25 in den Funkrufmodus aktivieren, um bei Nichterreichbarkeit über das Funkrufsystem übertragene Informationen speichern zu können.

Durch das erfindungsgemäße Verfahren kann die Erreichbarkeit eines Teilnehmers des Telekommunikationsnetzes 15 auf den vergleichsweise größeren räumlichen Bereich der Funkruf-Zone 35 im Vergleich zur Funkzelle 30 ausgedehnt werden.

Eine alternative Ausführungsform des Funktelefons 1 zeigt Figur 6 in Form eines Blockschaltbildes. Der Aufbau ist dabei gleich wie beim Funktelefon 1 gemäß Figur 2 mit Ausnahme der folgenden Unterschiede: Die erste Sende-/Empfangsantenne 55 ist direkt, das heißt ohne den ersten Umschalter 50 an die erste Sende-/Empfangseinheit 45 angeschlossen. Der Funkrufempfänger 20 ist nicht mehr mit der ersten Sende-/Empfangsantenne 55 verbindbar, umfaßt jedoch eine eigene Empfangsantenne 300 und ist mit der ersten Steuerung 40 verbunden. Der erste Umschalter 50 und seine Ansteuerung durch die erste Steuerung 40 sind nicht mehr erforderlich und auch nicht mehr vorgesehen.

Die Umschaltung zwischen Telefonmodus und Funkrufmodus erfordert bei dieser alternativen Ausführungsform keine Umschaltung der ersten Sende-/Empfangsantenne 55, da der Funkrufempfänger 20 eine eigene Empfangsantenne aufweist. Durch die Verbindung des Funkrufempfängers 20 mit der ersten Steuerung 40 wird der Funkrufempfänger 20 für den Funkrufmodus von der ersten Steuerung 40 aktiviert.

## Patentansprüche

1. Verfahren zum Betrieb eines Funktelefons (1), vorzugsweise eines Schnurlostelefons, mit integriertem Funkrufempfänger (20), vorzugsweise einem Pagingempfänger, dadurch gekennzeichnet, daß das Funktelefon (1) in einem Funkrufmodus zum Empfang von Funkrufsignalen betrieben wird, wenn keine Telefonverbindung über eine Basisstation (5) zum Funktelefon (1) aufbaubar ist, daß das Funktelefon (1) in einem Telefonmodus zum Empfang und Aussenden von Telefonsignalen betrieben wird, wenn eine Telefonverbindung über eine Basisstation (5) zum Funktelefon (1) aufbaubar ist, daß das Funktelefon (1) vom Telefonmodus in den Funkrufmodus umgeschaltet wird, sobald festgestellt wird, daß eine Telefonverbindung über die Basisstation (5) nicht mehr aufbaubar ist, und daß das Funktelefon (1) vom Funkrufmodus in den Telefonmodus umgeschaltet wird, sobald festgestellt wird, daß eine Telefonverbindung über die Basisstation (5) aufbaubar ist.

2. Verfahren nach Anspruch 1, dadurch gekennzeichnet, daß ein Funkrufsender (10) von der Basisstation (5) zur Abstrahlung von Funkrufsignalen an das Funktelefon (1) veranlaßt wird, wenn keine Telefonverbindung über die Basisstation (5) zum Funktelefon (1) aufbaubar ist.

3. Verfahren nach Anspruch 1 oder 2, dadurch gekennzeichnet, daß vom Funktelefon (1) zu vorgegebenen Zeiten eine Verbindungsprüfung durchgeführt wird, bei der empfangene Signale nach Synchronisationsdaten der Basisstation (5) abgetastet werden, daß das Funktelefon (1) im Funkrufmodus betrieben wird, wenn aufgrund der empfangenen Daten festgestellt wird, daß keine Synchronisation mit der Basisstation (5) möglich ist und daß das Funktelefon (1) im Telefonmodus betrieben wird, wenn aufgrund der empfangenen Daten festgestellt wird, daß eine Synchronisation mit der Basisstation (5) möglich ist.

4. Verfahren nach Anspruch 3, dadurch gekennzeichnet, daß im Funkrufmodus Stromsparzeiten vorgesehen sind, in denen die Verbindungsprüfung durchgeführt wird.

5. Verfahren nach einem der vorherigen Ansprüche, dadurch gekennzeichnet, daß bei Nichtannahme eines über ein Telekommunikationsnetz (15) eingehenden Rufes ein im Telefonmodus befindliches Funktelefon (1) in den Funkrufmodus umgeschaltet wird.

6. Verfahren nach einem der vorherigen Ansprüche, dadurch gekennzeichnet, daß durch das Funktelefon (1) im Telefonmodus keine Funkrufsignale empfangen und/oder im Funkrufmodus keine Telefonsignale gesendet oder empfangen werden.

7. Verfahren nach einem der vorherigen Ansprüche, dadurch gekennzeichnet, daß am Funktelefon (1) vorzugsweise mittels eines Schalters (25) zwischen dem Funkrufmodus und dem Telefonmodus umgeschaltet wird.
